# FASCICULE DE BREVET EUROPEEN

(11) **EP 3 543 077 B1**
(45) Date de publication et mention de la délivrance du brevet: **07.04.2021**
(21) Numéro de dépôt: 19161176.3
(22) Date de dépôt: 07.03.2019
(51) Int. Cl.: B60S 1/08, B60S 1/48, B60S 1/04

(54) **PROCEDE DE CONTROLE D'UN SYSTEME D'ESSUYAGE POUR VEHICULE AUTOMOBILE**
KONTROLLVERFAHREN EINES SCHEIBENREINIGUNGSSYSTEMS EINES KRAFTFAHRZEUGS
METHOD FOR CONTROLLING THE USE OF A WIPER SYSTEM FOR MOTOR VEHICLE

(30) Priorité: 20.03.2018 FR 1852393
(43) Date de publication de la demande: 25.09.2019
(73) Titulaire: Valeo Systèmes d'Essuyage, 78322 Le Mesnil Saint Denis (FR)
(72) Inventeur: CAILLOT, Gérald, 78322 LE MESNIL SAINT DENIS (FR); JARASSON, Jean-Michel, 78322 LE MESNIL SAINT DENIS (FR); IZABEL, Vincent, 78322 LE MESNIL SAINT DENIS (FR)
(74) Mandataire: Valeo Visibility

(56) Documents cités:
- EP-A1- 3 124 335
- DE-A1- 10 009 797
- DE-A1-102007 002 257
- DE-A1-102009 029 098

## Description

L'invention relève du domaine des procédés de contrôle de système d'essuyage pour véhicule automobile. Elle relève également du domaine de tels systèmes d'essuyage pour véhicule automobile.

Les véhicules automobiles sont couramment équipés d'un système d'essuyage comprenant au moins un balai d'essuyage d'un pare-brise. Un tel pare-brise est délimité latéralement par des montants d'une caisse du véhicule.

Le balai d'essuyage est entraîné, via un bras, par moteur d'entraînement entre une position initiale et une position extrême. Le moteur d'entraînement est lui-même commandé par une unité de contrôle. La position initiale est connue comme étant une position de repos du balai d'essuyage où le balai d'essuyage est soit en position sensiblement horizontale sur le pare-brise, c'est-à-dire le long du capot, soit en position sensiblement verticale par rapport au pare-brise c'est-à-dire le long d'un montant latéral ; et la position extrême est connue comme étant une position active du balai d'essuyage où le balai d'essuyage est soit en position sensiblement verticale sur le pare-brise, soit en position sensiblement horizontale sur le pare-brise.

L'unité de contrôle est configurée pour faire fonctionner le balai d'essuyage selon un ou plusieurs modes d'essuyages. Selon un mode d'essuyage classique, utilisé soit par temps de pluie, soit pour effectuer un nettoyage du pare-brise, le balai d'essuyage est déplacé alternativement entre la position initiale et la position extrême. Un tel déplacement du balai d'essuyage a pour but d'évacuer un liquide présent sur le pare-brise en vue d'améliorer la perception de la scène de route pour le conducteur du véhicule EP-A-3124335 montre le préambule des revendications 1 et 8.

Dans certaines situations, un inconvénient de ce mode d'essuyage classique réside dans la formation d'un phénomène d'aspiration du liquide par le balai d'essuyage lorsque le balai d'essuyage se déplace depuis la position extrême vers la position initiale. Ce phénomène d'aspiration du liquide par le balai d'essuyage est d'autant plus présent en raison d'une accumulation du liquide entre le balai d'essuyage et un des montants du véhicule, lorsque le balai d'essuyage se situe au niveau de sa position extrême. Ce phénomène d'aspiration tend à ramener le liquide dans le champ de vision du conducteur, ce qui se traduit par une gêne visuelle pour celui-ci, réduisant par conséquent sa perception de la scène de route.

L'invention a pour but de pallier à au moins cet inconvénient précité en proposant une amélioration du contrôle d'un système d'essuyage pour véhicule automobile permettant de limiter le phénomène d'aspiration du liquide par un balai d'essuyage.

A cet effet, l'invention a pour objet un procédé de contrôle d'un système d'essuyage pour véhicule automobile, le système d'essuyage comprenant au moins
- un balai d'essuyage d'un pare-brise apte à se déplacer entre une position initiale et une position extrême,
- une unité de contrôle d'un moteur d'entraînement du balai d'essuyage,
le procédé comprenant un premier mode d'essuyage dans lequel le balai d'essuyage est déplacé au moins entre la position initiale et la position extrême.

Selon l'invention, à réception par l'unité de contrôle d'un signal provenant d'un moyen de déclenchement, ledit signal étant représentatif d'un phénomène d'aspiration d'un liquide par le balai d'essuyage lorsque le balai d'essuyage se déplace depuis la position extrême vers la position initiale, le procédé exécute un deuxième mode d'essuyage configuré pour limiter le phénomène d'aspiration du liquide par le balai d'essuyage à partir d'une position intermédiaire située entre la position initiale et la position extrême.

Un tel signal active le deuxième mode d'essuyage seulement en présence du phénomène d'aspiration. Pour générer ce signal, le moyen de déclenchement est configuré pour détecter automatiquement le phénomène d'aspiration, notamment la présence de liquide dans une zone prédéterminée du pare-brise. Dans tous les cas, le signal est généré seulement après la détection du phénomène d'aspiration.

Dans le cas non revendiqué d'un moyen de déclenchement configuré pour être actionné manuellement, le signal est généré seulement après que le conducteur ait, d'une part identifié le phénomène d'aspiration et d'autre part, effectué une action visant à actionner manuellement le moyen de déclenchement.

Dans le cas d'un moyen de déclenchement configuré pour détecter automatiquement le phénomène d'aspiration, selon l'invention, le signal est généré seulement après que le moyen de déclenchement ait détecté le phénomène d'aspiration. Il convient de noter que dans le dernier cas, la détection est automatique, c'est-à-dire opérée par un moyen embarqué sur le véhicule et indépendamment des occupants du véhicule.

La position intermédiaire du balai d'essuyage correspond à une position angulaire du balai d'essuyage à partir de laquelle le phénomène d'aspiration du liquide par le balai d'essuyage peut être diminué. Cette position intermédiaire, à partir de laquelle le deuxième mode d'essuyage est configuré pour limiter le phénomène d'aspiration, est mesurée depuis la position initiale du balai d'essuyage et est connue de l'unité de contrôle. On pourra comprendre l'expression « à partir de la position intermédiaire » comme indiquant que le balai d'essuyage a précédemment effectué un déplacement depuis la position initiale.

Selon une caractéristique de l'invention, le deuxième mode d'essuyage est répété. Il convient de noter que le deuxième mode d'essuyage se termine par le retour du balai d'essuyage en position initiale afin de répéter, à nouveau, le deuxième mode d'essuyage.

Dans le premier mode d'essuyage, le balai d'essuyage effectue un déplacement depuis la position initiale jusqu'à la position extrême avant de retourner en position initiale. Dans le deuxième mode d'essuyage, le balai d'essuyage effectue un déplacement depuis la position initiale jusqu'à la position intermédiaire, où le deuxième mode d'essuyage est configuré pour limiter le phénomène d'aspiration, avant de se terminer par son retour en position initiale.

En pratique, le premier mode d'essuyage est activé pour évacuer un liquide présent sur le pare-brise dans un mouvement du balai d'essuyage entre la position initiale et la position extrême. Le premier mode d'essuyage est alors répété jusqu'à sa désactivation. Dans ce premier mode d'essuyage, lorsque l'unité de contrôle reçoit le signal représentatif du phénomène d'aspiration qui est émis par le moyen de déclenchement, l'unité de contrôle bascule du premier mode d'essuyage vers le deuxième mode d'essuyage. Une fois que le balai d'essuyage atteint la position intermédiaire depuis la position initiale, le deuxième mode d'essuyage est configuré pour limiter le phénomène d'aspiration. Le deuxième mode d'essuyage se termine par le retour du balai d'essuyage en position initiale pour être répété pendant un nombre de deuxième mode d'essuyage.

Selon une variante de réalisation de l'invention, le procédé bascule du deuxième mode d'essuyage vers le premier mode d'essuyage, consécutivement à une répétition du deuxième mode d'essuyage.

Selon cette variante de réalisation, la répétition du deuxième mode d'essuyage est indépendante de la présence du phénomène d'aspiration. Lorsque le procédé bascule dans le premier mode d'essuyage après le deuxième mode d'essuyage, le premier mode d'essuyage est alors, à nouveau, répété jusqu'à réception par l'unité de contrôle dudit signal.

En variante, le deuxième mode d'essuyage peut être répété tant que le signal est reçu par l'unité de contrôle.

Pour limiter ce phénomène d'aspiration, il est proposé un premier mode de contrôle, pour lequel dans le deuxième mode d'essuyage, à partir de la position intermédiaire, le balai d'essuyage retourne en position initiale. La position extrême représentant la position du balai d'essuyage à partir de laquelle peut se former le phénomène d'aspiration du liquide par le balai d'essuyage, on comprendra alors que, en limitant l'amplitude angulaire du balai d'essuyage entre la position initiale et la position intermédiaire, on prévient la formation du phénomène d'aspiration. Le deuxième mode d'essuyage consiste alors à déplacer le balai d'essuyage dans un mouvement d'aller et retour entre la position initiale et la position intermédiaire.

Selon un deuxième mode de contrôle, dans le deuxième mode d'essuyage, à partir de la position intermédiaire, le balai d'essuyage est déplacé en direction de la position extrême selon une deuxième vitesse supérieure à une première vitesse du balai d'essuyage pendant son déplacement entre la position initiale et la position intermédiaire. Lorsque le balai d'essuyage atteint la position intermédiaire depuis la position initiale, une accélération brusque de sa vitesse projette le liquide présent entre le balai d'essuyage et le montant du véhicule vers le montant, c'est-à-dire en dehors du champ de vision du conducteur. Le deuxième mode d'essuyage consiste alors à déplacer le balai d'essuyage, selon la première vitesse, depuis la position initiale jusqu'à la position intermédiaire, puis à déplacer le balai d'essuyage, selon la deuxième vitesse, depuis la position intermédiaire en direction de la position extrême avant que le balai d'essuyage ne retourne en position initiale.

Selon une variante de ce deuxième mode de contrôle, le balai d'essuyage se déplace jusqu'à la position extrême. Le déplacement du balai d'essuyage, selon la deuxième vitesse, jusqu'à la position extrême garantit une bonne évacuation latérale du liquide présent sur le pare-brise.

Selon un troisième mode de contrôle, le système d'essuyage comprend au moins un dispositif de projection de liquide. Dans le premier mode d'essuyage, une première quantité de liquide est projetée par le dispositif de projection. Dans le deuxième mode d'essuyage, à partir de la position intermédiaire, une seconde quantité de liquide, inférieure à la première quantité, est projetée par le dispositif de projection.

Le dispositif de projection prend la forme d'une ou plusieurs buses. Selon un premier exemple de l'invention, cette ou ces buses sont solidaires du balai d'essuyage. On comprend ici que le dispositif de projection prend la forme d'une rampe intégrée au balai et pourvu de trous par lesquels le liquide est projeté.

Le système d'essuyage peut également comprendre un bras d'entraînement du balai d'essuyage, bras d'entraînement et balai d'essuyage formant un ensemble. Selon un deuxième exemple de l'invention complémentaire ou alternatif au premier exemple exposé ci-dessus, la ou les buses sont solidaires du bras d'entraînement. Il s'agit alors d'un dispositif de projection attaché au bras d'entrainement et qui peut s'étendre sur tout ou partie de la longueur de celui-ci, des trous étant ménagés pour projeter le liquide sur l'intégralité de la surface balayée par le balai d'essuyage qui est associé au bras d'entrainement concerné.

Dans ce troisième mode de contrôle, le terme « liquide » désigne un liquide présent sur le pare-brise pouvant être de l'eau de pluie et/ou un produit projeté par le dispositif de projection.

Etant donné que le liquide projeté par le dispositif de projection du système d'essuyage vient générer ou augmenter la présence de liquide entre le balai d'essuyage et le montant du véhicule, la réduction de la quantité de liquide projetée par le dispositif de projection a pour conséquence de limiter la présence de liquide entre la position intermédiaire et la position extrême, limitant ainsi la formation du phénomène d'aspiration.

Selon une variante de ce troisième mode de contrôle, un angle de projection de liquide projeté par le dispositif de projection est réduit sous l'effet de la réduction de la quantité de liquide. On notera que l'angle de projection du dispositif de projection prend comme référence une extension longitudinale du bras d'entraînement portant ce dispositif de projection et/ou du balai d'essuyage portant ce dispositif de projection. Selon la position du balai d'essuyage sur le pare-brise, une réduction de débit de liquide met en œuvre la seconde quantité de liquide et permet alors de contrôler l'angle de projection du dispositif de projection pour limiter davantage le phénomène d'aspiration.

Selon une variante non revendiquée, le moyen de déclenchement est configuré pour être actionné manuellement.

Selon des caractéristiques du moyen de déclenchement :
- le moyen de déclenchement peut être un capteur vocal actionné à l'aide d'une commande vocale de l'utilisateur,
- le moyen de déclenchement peut être un moyen d'actionnement tactile,
- le moyen de déclenchement peut être un moyen d'actionnement mécanique.

Selon l'invention, le moyen de déclenchement est configuré pour détecter automatiquement le phénomène d'aspiration du liquide par le balai d'essuyage. Le moyen de déclenchement détecte automatiquement la présence de liquide sur une zone déterminée du pare-brise. Cette zone déterminée du pare-brise peut être une zone angulaire du pare-brise comprise entre la position intermédiaire et la position extrême. Alternativement ou de manière complémentaire, la zone déterminée est au moins en partie superposée avec un champ de vision réglementaire du conducteur. La présence de liquide dans ce champ de vision réglementaire gène la visibilité et c'est la raison pour laquelle le procédé bascule le système d'essuyage du premier mode d'essuyage vers le deuxième mode d'essuyage.

Selon des caractéristiques du moyen de déclenchement :
- le moyen de déclenchement est un capteur, tel qu'une caméra par exemple,
- le système d'essuyage peut comprendre un moyen de détermination de la position angulaire du balai d'essuyage entre la position initiale et la position extrême.

Selon une série de caractéristiques pouvant être prises en combinaison ou indépendamment l'une de l'autre, le procédé objet de l'invention peut comprendre :
- dans une étape de mesure d'un niveau de liquide, le moyen de déclenchement mesure un niveau du liquide dans une zone angulaire du balai d'essuyage située entre la position intermédiaire et la position extrême. Cette mesure peut consister en une mesure de la présence de liquide selon une distance perpendiculaire au montant. Selon un aspect de l'invention, le moyen de déclenchement détecte le liquide dans une zone déterminée correspondant au moins en partie au champ de vision réglementaire du véhicule considéré,
- dans une étape de comparaison du niveau de liquide, le moyen de déclenchement compare le niveau du liquide présent dans ladite zone angulaire par rapport à un niveau prédéterminé,
- dans une étape d'émission du signal, le signal correspond à un niveau du liquide mesuré égal ou supérieur au niveau prédéterminé,
- consécutivement au basculement du deuxième mode d'essuyage vers le premier mode d'essuyage, l'étape de mesure du niveau de liquide peut être exécutée,
- une étape de détermination de la position angulaire du balai d'essuyage,
- une étape de comparaison de la position angulaire du balai d'essuyage par rapport à la position intermédiaire.

Selon un autre aspect, l'invention a pour objet un système d'essuyage pour véhicule automobile, le système d'essuyage comprenant au moins :
- un balai d'essuyage d'un pare-brise apte à se déplacer entre une position initiale et une position extrême,
- une unité de contrôle d'un moteur d'entraînement du balai d'essuyage.

Selon l'invention, le système d'essuyage est associé à un moyen de déclenchement d'un signal représentatif d'un phénomène d'aspiration d'un liquide par le balai d'essuyage lorsque le balai d'essuyage se déplace depuis la position extrême vers la position initiale.

On comprendra que lorsque le système d'essuyage est associé au moyen de déclenchement, il forme un ensemble d'essuyage actionné par le signal représentatif du phénomène d'aspiration du liquide par le balai d'essuyage.

Le système d'essuyage associé au moyen de déclenchement est avantageusement apte à mettre en œuvre le procédé de contrôle décrit dans le présent document.

Le moyen de déclenchement peut avantageusement comprendre les caractéristiques du moyen de déclenchement décrit dans le présent document, particulièrement celles décrites dans le procédé de contrôle de l'invention.

D'autres caractéristiques, détails et avantages de l'invention ressortiront plus clairement à la lecture de la description donnée ci-après à titre indicatif en relation avec des dessins dans lesquels :
- la figure 1 est une vue schématique d'un système d'essuyage pour véhicule automobile,
- la figure 2 est une vue schématique d'un des balais d'essuyage selon plusieurs positions angulaires, à savoir, une position initiale, une position extrême et une position intermédiaire,
- la figure 3 représente un mode de réalisation particulier de l'invention dans lequel le balai d'essuyage de la figure 2 comprend des buses de projection du liquide,
- la figure 4 représente un découpage par segments d'une zone angulaire du balai d'essuyage comprise entre la position intermédiaire et la position extrême,
- la figure 4A représente un agrandissement d'une section de la zone angulaire selon un exemple de présence de liquide,
- la figure 4B représente un agrandissement d'une section de la zone angulaire selon un autre exemple de présence de liquide,
- la figure 5 illustre un ordinogramme décrivant le basculement, à réception d'un signal représentatif du phénomène d'aspiration, d'un premier mode d'essuyage vers un deuxième mode d'essuyage,
- la figure 6 illustre un ordinogramme selon une première variante de celui décrit en figure 5,
- la figure 7 illustre un ordinogramme selon une deuxième variante de celui décrit en figure 5.

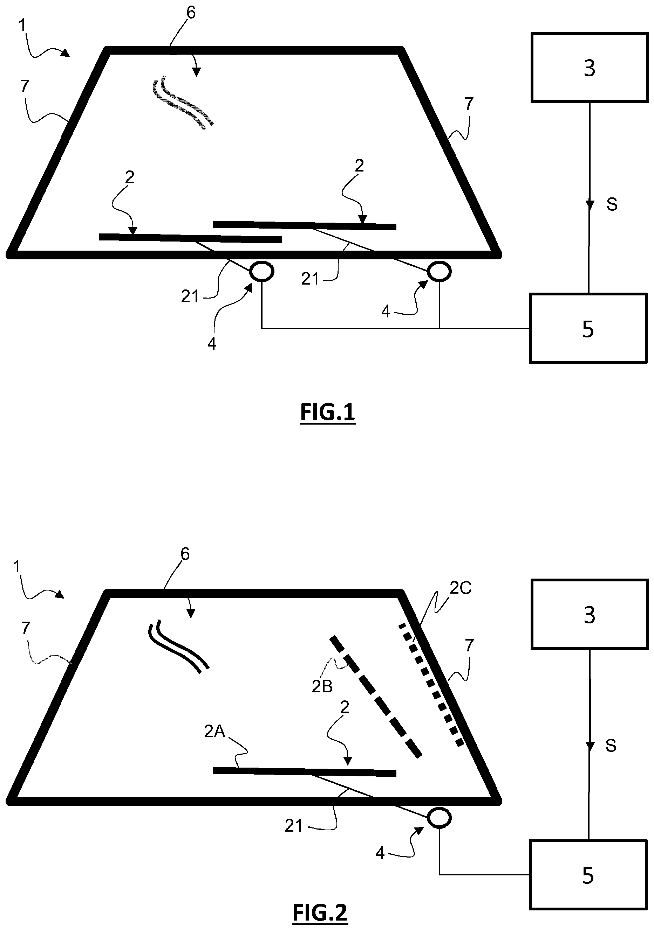

A la figure 1, on a représenté un système d'essuyage 1 d'un véhicule automobile. Le système d'essuyage 1 comprend ici deux balais d'essuyage 2 d'un pare-brise 6 du véhicule, un moteur d'entraînement 4 pour les deux balais d'essuyage 2 ou un moteur d'entraînement 4 pour chacun des balais d'essuyage 2 et une unité de contrôle 5 du ou des moteur(s) d'entraînement 4. Les balais d'essuyage 2 sont portés par des bras d'entraînement 21. On a également représenté un moyen de déclenchement 3 associé au système d'essuyage 1 pour former un ensemble de nettoyage du pare-brise 6 du véhicule. Ce moyen de déclenchement 3 est configuré pour émettre un signal S représentatif d'un phénomène d'aspiration d'un liquide par le balai d'essuyage 2. L'unité de contrôle 5 est configurée pour recevoir le signal S.

Le pare-brise 6, représenté depuis l'extérieur du véhicule, est avantageusement un pare-brise avant du véhicule. Le pare-brise 6 est monté sur des montants 7 du véhicule de sorte que ces derniers délimitent latéralement le pare-brise 6.

A la figure 2, on a représenté uniquement le balai d'essuyage 2 côté conducteur pour lequel se produit le phénomène d'aspiration d'un liquide par le balai d'essuyage 2. Bien entendu, ce phénomène d'aspiration peut également exister à l'égard du balai d'essuyage côté passager, notamment dans le cas d'un système d'essuyage « papillon ».

Le balai d'essuyage 2 côté conducteur se déplace angulairement entre une position initiale 2A et une position extrême 2C. La position initiale 2A et la position extrême 2C représentent les positions angulaires limites d'une amplitude angulaire maximale du balai d'essuyage 2 lorsque celui-ci est utilisé dans un premier mode d'essuyage. Un tel premier mode d'essuyage consiste à déplacer le balai d'essuyage 2 depuis la position initiale 2A jusqu'à la position extrême 2C selon une vitesse constante. Toujours pendant ce premier mode d'essuyage, lorsque le balai d'essuyage 2 atteint la position extrême 2C, celui-ci retourne en position initiale 2A.

On a également représenté une position intermédiaire 2B du balai d'essuyage 2 angulairement située entre la position initiale 2A et la position extrême 2C. La position intermédiaire 2B est une position angulaire du balai d'essuyage 2 délimitant avec la position extrême 2C une zone angulaire dans laquelle apparaît le phénomène d'aspiration du liquide par le balai d'essuyage 2 lorsque le balai d'essuyage 2 se déplace depuis la position extrême 2C vers la position initiale 2A. Cette position intermédiaire 2B est connue de l'unité de contrôle 5.

Ce phénomène d'aspiration du liquide par le balai d'essuyage 2 est principalement dû à l'accumulation du liquide entre le balai d'essuyage 2 se situant au niveau de la position extrême 2C et le montant 7 du véhicule. Le liquide est alors accumulé le long entre le balai d'essuyage 2 et le montant 7. En conséquence du déplacement de retour de balai d'essuyage 2 depuis la position extrême 2C vers la position initiale 2A, le liquide accumulé est aspiré par le balai d'essuyage 2 pour s'étendre dans la zone angulaire et gêner la visibilité pour le conducteur de la scène de route.

Dans le présent document, on utilisera le terme « phénomène d'aspiration » pour désigner le phénomène d'aspiration du liquide par le balai d'essuyage 2 lorsque le balai d'essuyage 2 se déplace depuis la position extrême 2C vers la position initiale 2A.

Le moteur d'entraînement 4 du balai d'essuyage 2 est équipé d'un moyen de détermination de la position angulaire du balai d'essuyage 2 permettant de déterminer à chaque instant la position angulaire du balai d'essuyage 2 sur le pare-brise 6. La position angulaire du balai d'essuyage 2 est alors transmise par le moyen de détermination de la position angulaire à l'unité de contrôle 5. Un tel moyen de détermination de la position angulaire du balai d'essuyage 2 peut, par exemple, être un capteur à effet Hall disposé dans le ou les moteur(s) d'entraînement 4.

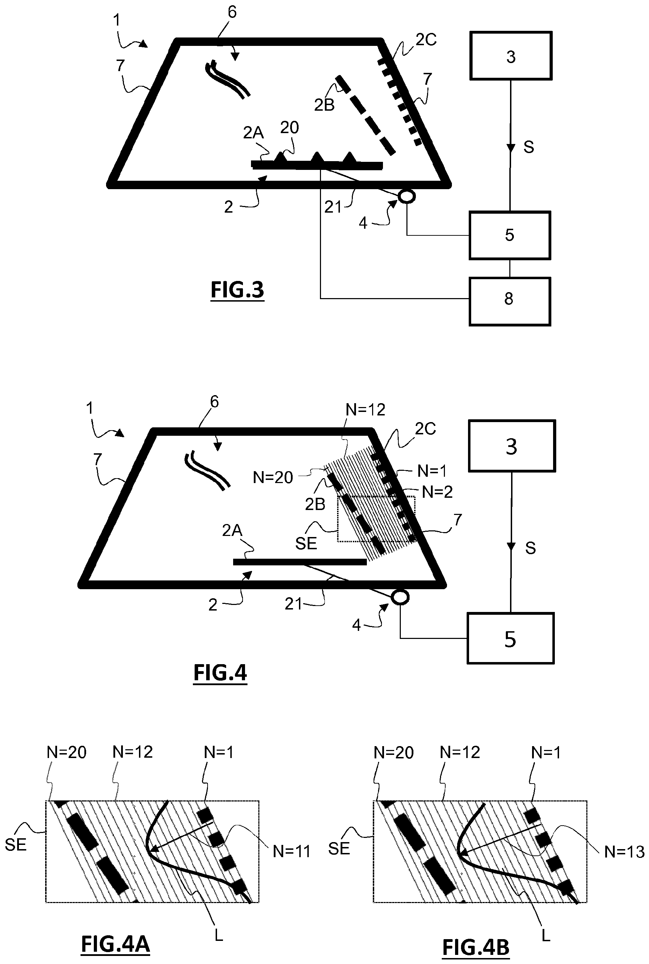

A la figure 3, on a représenté une variante de réalisation du système d'essuyage 1 dans lequel le balai d'essuyage 2 comprend un dispositif de projection du liquide. Selon cette variante, le dispositif de projection de liquide 20 est formé par des buses de projection du liquide. Le débit du liquide projeté est avantageusement contrôlé par une pompe 8 équipée d'un régulateur de pression. Le dispositif de projection 20 est ainsi amené à accompagner le déplacement angulaire du balai d'essuyage 2 sur le pare-brise 6 et à projeter du liquide sous commande de l'unité de contrôle 5 via la pompe 8.

De manière alternative ou complémentaire, le dispositif de projection de liquide est solidaire du bras d'entraînement 21 qui porte le balai d'essuyage 2. Une ou plusieurs buses peuvent alors être attachées à ce bras d'entraînement et être orientées de manière à arroser la surface utile du pare-brise.

A la figure 4, on a représenté un découpage de la zone angulaire selon plusieurs niveaux N numérotés de 1 à 20. Ce découpage de la zone angulaire permet une mesure d'un niveau de liquide et une comparaison de ce niveau de liquide présent dans cette zone angulaire par rapport à une valeur prédéterminée, tel que cela sera décrit ultérieurement.

Selon une première variante non revendiquée du moyen de déclenchement 3, le moyen de déclenchement 3 est configuré pour être actionné manuellement par le conducteur du véhicule. Selon un exemple, le moyen de déclenchement 3 est un moyen d'actionnement mécanique tel qu'un bouton poussoir, par exemple, ou encore un moyen d'actionnement tactile tel qu'une zone dédiée sur un tableau de commande du véhicule, comme un écran tactile par exemple. Un tel actionnement manuel peut être effectué lorsque le conducteur détecte visuellement le phénomène d'aspiration du liquide par le balai d'essuyage 2. L'actionnement manuel a pour effet de générer le signal S.

Selon une variante revendiquée du moyen de déclenchement 3, il est configuré pour détecter automatiquement le phénomène d'aspiration du liquide par le balai d'essuyage 2. Par exemple, le moyen de déclenchement 3 est un capteur, tel qu'une caméra ou un capteur de pare-brise, par exemple. Ce moyen de déclenchement 3 peut être disposé à l'intérieur du véhicule. Dans ce cas, le moyen de déclenchement 3 peut être, dans une étape de mesure d'un niveau du liquide, configuré pour mesurer le niveau du liquide dans la zone angulaire. Puis, dans une étape de comparaison du niveau de liquide, le moyen de déclenchement 3 peut comparer le niveau du liquide présent dans ladite zone angulaire par rapport à un niveau de liquide prédéterminé, Enfin, dans une étape d'émission du signal S, le signal S reçu par l'unité de contrôle 5 peut correspondre à un niveau du liquide mesuré égal ou supérieur au niveau prédéterminé.

En ce qui concerne plus particulièrement l'étape de mesure du niveau de liquide, le moyen de déclenchement 3 peut être configuré pour détecter automatiquement la présence du liquide entre chacun des segments N représentés à la figure 4. Les figures 4A et 4B représentent un agrandissement d'une section SE de la zone angulaire qui est représentée à la figure 4. Selon un exemple, le niveau prédéterminé correspond à la détection de liquide du niveau numéroté 1 jusqu'au niveau numéroté 12. Ainsi, tel que représenté à la figure 4A, lorsque le moyen de déclenchement 3 détecte du liquide L du niveau numéroté 1 jusqu'au niveau numéroté 11, le signal S représentatif du phénomène d'aspiration n'est pas reçu par l'unité de contrôle 5. Alors que, tel que représenté à la figure 4A, lorsque le moyen de déclenchement 3 détecte du liquide L du niveau numéroté 1 jusqu'au niveau numéroté 12 et au-delà jusqu'au niveau numéro 20, le signal S représentatif du phénomène d'aspiration est reçu par l'unité de contrôle 5. On comprendra que la présence du liquide L dans une portion de la zone angulaire comprise entre le niveau numéro 12 et le niveau numéro 20 est plus contraignante pour la conduite du conducteur que la présence du liquide L dans une portion de la zone angulaire comprise entre le niveau numéro 1 et le niveau numéro 12.

Alternativement, l'étape de comparaison du niveau de liquide peut être réalisée par l'unité de contrôle 5. Dans ce cas, on comprendra que le niveau de liquide prédéterminé est connu de l'unité de contrôle 5 et que l'unité de contrôle 5 est apte à recevoir la mesure du niveau de liquide mesuré par le moyen de déclenchement 3. Quand cette mesure est inférieure au niveau de liquide prédéterminé, le système d'essuyage 1 est commandé selon le premier mode d'essuyage. Quand cette mesure est supérieure au niveau de liquide prédéterminé, le système d'essuyage 1 bascule du premier mode d'essuyage vers le deuxième mode d'essuyage, en vue de réduire ou supprimer le phénomène d'aspiration.

De manière alternative à la comparaison des niveaux de liquide exposée ci-dessus, l'invention couvre un moyen de déclenchement 3, par exemple une caméra, qui observe une zone prédéterminée du pare-brise correspondant à un champ de vision réglementaire pour le véhicule concerné. Dès que la présence de liquide est détectée dans cette zone prédéterminée, le système d'essuyage 1 bascule du premier mode d'essuyage vers le deuxième mode d'essuyage, en vue de réduire ou supprimer le phénomène d'aspiration.

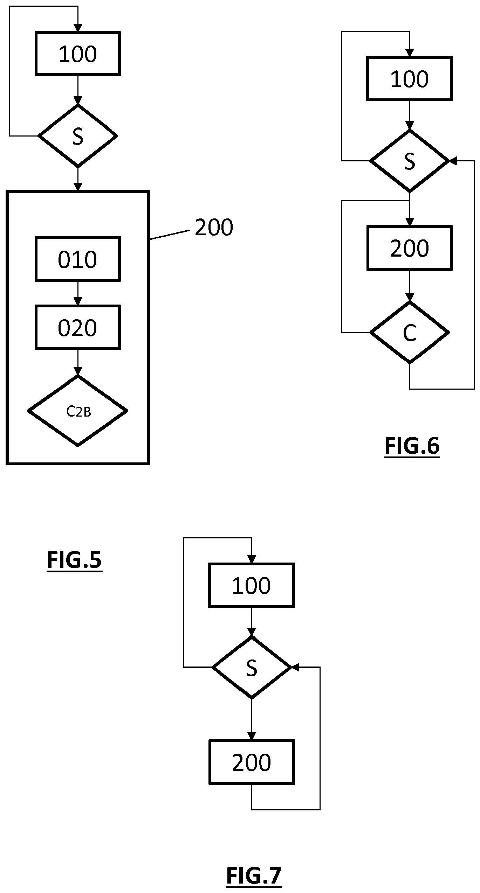

A la figure 5, on a représenté un procédé de contrôle du système d'essuyage 1 conforme à l'invention. Dans ce procédé, tant que le moyen de déclenchement 3 ne génère pas le signal S représentatif du phénomène d'aspiration à destination de l'unité de contrôle 5, le balai d'essuyage 2 reste dans le premier mode d'essuyage 100, quand ce dernier a été activé préalablement.

Lorsque le moyen de déclenchement 3 génère le signal S représentatif du phénomène d'aspiration à destination de l'unité de contrôle 5, le procédé bascule du premier mode d'essuyage 100 vers un deuxième mode d'essuyage 200, au cours duquel le balai d'essuyage 2 met en œuvre une action qui vise à réduire le phénomène d'aspiration de liquide. Dans ce deuxième mode d'essuyage 200, la vitesse du balai d'essuyage 2 entre la position initiale 2A et la position intermédiaire 2B peut être identique à la vitesse du balai d'essuyage 2 dans le premier mode d'essuyage 100.

Il convient de noter que lorsque le moyen de déclenchement 3 génère le signal S représentatif du phénomène d'aspiration à destination de l'unité de contrôle 5, le basculement du premier mode d'essuyage 100 vers le deuxième mode d'essuyage 200 peut n'être effectué qu'une fois que le balai d'essayage 2 retourne en position initiale 2A.

Dans ce deuxième mode d'essuyage 200, dans une étape de détermination 010 de la position angulaire du balai d'essuyage, un capteur de position détermine la position angulaire du balai d'essuyage 2 sur le pare-brise 6. Puis, dans une étape de comparaison 020 de la position angulaire du balai d'essuyage 2, l'unité de contrôle 5 compare cette position angulaire mesurée par rapport à la position intermédiaire 2B. Lorsque le balai d'essuyage 2 atteint la position intermédiaire 2B depuis la position initiale 2A, une condition C₂B pour limiter le phénomène d'aspiration est alors remplie, le deuxième mode d'essuyage 200 est alors configuré pour limiter le phénomène d'aspiration.

Selon un premier mode de contrôle, dans le deuxième mode d'essuyage 200, le balai d'essuyage 2 retourne en position initiale 2A après avoir atteint position intermédiaire 2B. L'amplitude angulaire du balai d'essuyage 2 est limitée de sorte que le balai d'essuyage 2 ne soit pas présent dans la zone angulaire pour laquelle le phénomène d'aspiration apparaît. La gêne visuelle pour le conducteur est alors limitée. Selon ce premier mode de contrôle, le balai d'essuyage 2 se déplace depuis la position initiale 2A jusqu'à la position intermédiaire 2B avant de retourner vers la position initiale 2A. Le deuxième mode d'essuyage 200 consiste ici en une réduction du déplacement angulaire parcouru par le balai d'essuyage 2.

Selon un deuxième mode de contrôle, dans le deuxième mode d'essuyage 200, le balai d'essuyage 2 est déplacé à partir de la position intermédiaire 2B en direction de la position extrême 2C selon une deuxième vitesse supérieure à une première vitesse du balai d'essuyage 2 dans son déplacement entre la position initiale et la position intermédiaire. L'accélération brusque qui résulte de la mise en œuvre de cette deuxième vitesse permet au liquide, présent entre le balai d'essuyage 2 et le montant 7, de franchir le montant 7 du véhicule ou d'être canalisé, pour être finalement évacué du pare-brise 6. Selon ce deuxième mode de contrôle, dans le deuxième mode d'essuyage 200, le balai d'essuyage 2 se déplace depuis la position initiale 2A jusqu'à la position intermédiaire 2B selon la première vitesse, puis le balai d'essuyage 2 se déplace depuis la position intermédiaire 2B en direction de la position extrême 2C - ou jusqu'à celle-ci - selon la deuxième vitesse, avant que le balai d'essuyage 2 ne retourne en position initiale 2A.

Selon un troisième mode de contrôle, le dispositif de projection 20 de liquide projette une première quantité de liquide pendant le premier mode d'essuyage 100. En basculant vers le deuxième mode d'essuyage 200, à partir de la position intermédiaire 2B, une seconde quantité de liquide est projetée par le dispositif de projection 20 pour limiter la formation du phénomène d'aspiration. La seconde quantité de liquide projetée pendant l'activation du deuxième mode d'essuyage 200 est inférieure à la première quantité de liquide projetée pendant la mise en œuvre du premier mode d'essuyage 100.

Ce troisième mode de contrôle peut avantageusement être combiné au premier mode de contrôle ou au deuxième mode de contrôle.

A la figure 6, on a représenté une première variante de répétition du deuxième mode d'essuyage 200 selon l'un quelconque des modes de contrôle. Afin de simplifier la compréhension du procédé, on n'a pas représenté l'étape de détermination 010 de la position angulaire du balai d'essuyage, l'étape de comparaison 020 de la position angulaire du balai d'essuyage 2 et la condition C2B pour limiter le phénomène d'aspiration.

Dans cette première variante de répétition, le deuxième mode d'essuyage 200 est répété à plusieurs reprises, par exemple une valeur prédéterminée C. Lorsque le nombre de répétitions atteint la valeur prédéterminée C, si l'unité de contrôle 5 ne reçoit pas le signal S représentatif du phénomène d'aspiration, le procédé bascule, à l'aide de l'unité de contrôle 5, du deuxième mode d'essuyage 200 vers le premier mode d'essuyage 100. On comprendra que l'unité de contrôle 5 reste en attente de réception du signal S émis par le moyen de déclenchement 3. Si l'unité de contrôle 5 reçoit le signal S représentatif du phénomène d'aspiration, la répétition du deuxième mode d'essuyage 200 est à nouveau exécutée.

A la figure 7, on a représenté une deuxième variante de répétition du deuxième mode d'essuyage 200 selon l'un quelconque des modes de contrôle, également simplifiée pour faciliter la compréhension par rapport à la figure 5. Dans cette deuxième variante de répétition, le deuxième mode d'essuyage 200 est répété tant que le signal S représentatif du phénomène d'aspiration est reçu par l'unité de contrôle 5. Dans le cas où le moyen de déclenchement 3 est configuré pour être actionné manuellement, le signal S représentatif du phénomène d'aspiration peut être généré tant qu'un changement de position du moyen d'actionnement mécanique ou tactile est détecté. Dans le cas où le moyen de déclenchement 3 est configuré pour détecter automatiquement le phénomène d'aspiration du liquide par le balai d'essuyage 2, le signal S représentatif du phénomène d'aspiration est généré tant que le moyen de déclenchement 3 détecte le phénomène d'aspiration.

Dans ces variantes de répétition du deuxième mode d'essuyage 200, on notera que le basculement du deuxième mode d'essuyage 200 vers le premier mode d'essuyage 100 n'est effectué qu'une fois le dernier cycle du deuxième mode d'essuyage 200 est opéré.

Bien entendu, les caractéristiques, les variantes et les différents modes et formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

## Revendications

1. Procédé de contrôle d'un système d'essuyage (1) pour véhicule automobile, le système d'essuyage (1) comprenant au moins :
- un balai d'essuyage (2) d'un pare-brise (6) apte à se déplacer entre une position initiale (2A) et une position extrême (2C),
- une unité de contrôle (5) d'un moteur d'entraînement (4) du balai d'essuyage (2),
le procédé comprenant :
- un premier mode d'essuyage (100) dans lequel le balai d'essuyage (2) est déplacé au moins entre la position initiale (2A) et la position extrême (2C),
ledit procédé étant **caractérisé en ce que** :
- à réception, par l'unité de contrôle (5), d'un signal (S) provenant d'un moyen de déclenchement (3), ledit signal (S) étant représentatif d'un phénomène d'aspiration d'un liquide par le balai d'essuyage (2) lorsque le balai d'essuyage (2) se déplace depuis la position extrême (2C) vers la position initiale (2A), le procédé exécute un deuxième mode d'essuyage (200) configuré pour limiter le phénomène d'aspiration du liquide par le balai d'essuyage (2) à partir d'une position intermédiaire (2B) située entre la position initiale (2A) et la position extrême (2C), et **en ce que** le moyen de déclenchement (3) est configuré pour détecter automatiquement le phénomène d'aspiration du liquide par le balai d'essuyage (2).

2. Procédé de contrôle selon la revendication précédente, **caractérisé en ce que** le deuxième mode d'essuyage (200) est répété.

3. Procédé de contrôle selon la revendication précédente, **caractérisé en ce que** le procédé bascule du deuxième mode d'essuyage (200) vers le premier mode d'essuyage (100), consécutivement à la répétition du deuxième mode d'essuyage (200).

4. Procédé de contrôle selon l'une quelconque des revendications précédentes, **caractérisé en ce que** dans le deuxième mode d'essuyage (200), à partir de la position intermédiaire (2B), le balai d'essuyage (2) retourne en position initiale (2A).

5. Procédé de contrôle selon l'une quelconque des revendications 1 à 3, **caractérisé en ce que** dans le deuxième mode d'essuyage (200), à partir de la position intermédiaire (2B), le balai d'essuyage (2) est déplacé en direction de la position extrême (2C) selon une deuxième vitesse supérieure à une première vitesse du balai d'essuyage (2) pendant son déplacement entre la position initiale (2A) et la position intermédiaire (2B).

6. Procédé de contrôle selon l'une quelconque des revendications 1 à 5, **caractérisé en ce que** le système d'essuyage (1) comprend au moins un dispositif de projection (20) de liquide, et **en ce que** dans le premier mode d'essuyage (100), une première quantité de liquide est projetée par le dispositif de projection (20), et **en ce que** dans le deuxième mode d'essuyage (200), à partir de la position intermédiaire (2B), une seconde quantité de liquide, inférieure à la première quantité, est projetée par le dispositif de projection (20).

7. Procédé de contrôle selon la revendication précédente, **caractérisé en ce que** la seconde quantité de liquide résulte d'une réduction du débit de liquide dans le dispositif de projection (20), comparé à un débit de liquide correspondant à la première quantité de liquide.

8. Système d'essuyage (1) pour véhicule automobile comprenant au moins :
- un balai d'essuyage (2) d'un pare-brise (6) apte à se déplacer entre une position initiale (2A) et une position extrême (2C),
- une unité de contrôle (5) d'un moteur d'entraînement (4) du balai d'essuyage (2),
le système d'essuyage (1) étant **caractérisé en ce qu'**il est associé à un moyen de déclenchement (3) d'un signal (S) représentatif d'un phénomène d'aspiration d'un liquide par le balai d'essuyage (2) lorsque le balai d'essuyage (2) se déplace depuis la position extrême (2C) vers la position initiale (2A), le moyen de déclenchement (3) étant configuré pour détecter automatiquement le phénomène d'aspiration du liquide par le balai d'essuyage (2).

## Patentansprüche

1. Verfahren zur Steuerung eines Wischersystems (1) für ein Kraftfahrzeug, wobei das Wischersystem (1) wenigstens umfasst:
- ein Wischerblatt (2) für eine Windschutzscheibe (6), das in der Lage ist, sich zwischen einer Anfangsposition (2A) und einer äußersten Position (2C) zu bewegen,
- eine Steuereinheit (5) eines Antriebsmotors (4) des Wischerblattes (2),
wobei das Verfahren umfasst:
- einen ersten Wischmodus (100), in welchem das Wischerblatt (2) wenigstens zwischen der Anfangsposition (2A) und der äußersten Position (2C) bewegt wird,
wobei das Verfahren **dadurch gekennzeichnet ist, dass**:
- beim Empfang, durch die Steuereinheit (5), eines von einem Auslösemittel (3) kommenden Signals (S), wobei das Signal (S) für eine Erscheinung des Ansaugens einer Flüssigkeit durch das Wischerblatt (2), wenn sich das Wischerblatt (2) von der äußersten Position (2C) zu der Anfangsposition (2A) hin bewegt, repräsentativ ist, das Verfahren einen zweiten Wischmodus (200) ausführt, der dafür ausgelegt ist, die Erscheinung des Ansaugens der Flüssigkeit durch das Wischerblatt (2) ab einer zwischen der Anfangsposition (2A) und der äußersten Position (2C) befindlichen Zwischenposition (2B) zu begrenzen, und dadurch, dass das Auslösemittel (3) dafür ausgelegt ist, die Erscheinung des Ansaugens der Flüssigkeit durch das Wischerblatt (2) automatisch zu erkennen.

2. Verfahren zur Steuerung nach dem vorhergehenden Anspruch, **dadurch gekennzeichnet, dass** der zweite Wischmodus (200) wiederholt wird.

3. Verfahren zur Steuerung nach dem vorhergehenden Anspruch, **dadurch gekennzeichnet, dass** das Verfahren im Anschluss an die Wiederholung des zweiten Wischmodus (200) vom zweiten Wischmodus (200) zum ersten Wischmodus (100) umschaltet.

4. Verfahren zur Steuerung nach einem der vorhergehenden Ansprüche, **dadurch gekennzeichnet, dass** im zweiten Wischmodus (200) das Wischerblatt (2) ab der Zwischenposition (2B) in die Anfangsposition (2A) zurückkehrt.

5. Verfahren zur Steuerung nach einem der Ansprüche 1 bis 3, **dadurch gekennzeichnet, dass** im zweiten Wischmodus (200) das Wischerblatt (2) ab der Zwischenposition (2B) mit einer zweiten Geschwindigkeit, die höher als eine erste Geschwindigkeit des Wischerblattes (2) während seiner Bewegung zwischen der Anfangsposition (2A) und der Zwischenposition (2B) ist, in Richtung der äußersten Position (2C) bewegt wird.

6. Verfahren zur Steuerung nach einem der Ansprüche 1 bis 5, **dadurch gekennzeichnet, dass** das Wischersystem (1) wenigstens eine Vorrichtung zum Spritzen (20) von Flüssigkeit umfasst, und dadurch, dass im ersten Wischmodus (100) eine erste Flüssigkeitsmenge von der Spritzvorrichtung (20) gespritzt wird, und dadurch, dass im zweiten Wischmodus (200) ab der Zwischenposition (2B) eine zweite Flüssigkeitsmenge, die kleiner als die erste Menge ist, von der Spritzvorrichtung (20) gespritzt wird.

7. Verfahren zur Steuerung nach dem vorhergehenden Anspruch, **dadurch gekennzeichnet, dass** die zweite Flüssigkeitsmenge aus einer Verringerung des Flüssigkeitsdurchsatzes in der Spritzvorrichtung (20) im Vergleich zu einem Flüssigkeitsdurchsatz, welcher der ersten Flüssigkeitsmenge entspricht, resultiert.

8. Wischersystem (1) für ein Kraftfahrzeug, wenigstens umfassend:
- ein Wischerblatt (2) für eine Windschutzscheibe (6), das in der Lage ist, sich zwischen einer Anfangsposition (2A) und einer äußersten Position (2C) zu bewegen,
- eine Steuereinheit (5) eines Antriebsmotors (4) des Wischerblattes (2),
wobei das Wischersystem (1) **dadurch gekennzeichnet ist, dass** es mit einem Mittel zur Auslösung (3) eines Signals (S) verbunden ist, das für eine Erscheinung des Ansaugens einer Flüssigkeit durch das Wischerblatt (2), wenn sich das Wischerblatt (2) von der äußersten Position (2C) zu der Anfangsposition (2A) hin bewegt, repräsentativ ist, wobei das Auslösemittel (3) dafür ausgelegt ist, die Erscheinung des Ansaugens der Flüssigkeit durch das Wischerblatt (2) automatisch zu erkennen.

## Claims

1. Method for controlling a wiper system (1) for a motor vehicle, the wiper system (1) comprising at least:
- one wiper (2) of a windscreen (6) capable of being displaced between an initial position (2A) and an extreme position (2C),
- a control unit (5) of a drive motor (4) of the wiper (2),
the method comprising:
- a first wiping mode (100) in which the wiper (2) is displaced at least between the initial position (2A) and the extreme position (2C),
said method being **characterized in that**:
- on reception, by the control unit (5), of a signal (S) originating from a triggering means (3), said signal (S) being representative of a phenomenon of suction of a liquid by the wiper (2) when the wiper (2) is displaced from the extreme position (2C) to the initial position (2A), the method executes a second wiping mode (200) configured to limit the phenomenon of suction of the liquid by the wiper (2) from an internal position (2B) situated between the initial position (2A) and the extreme position (2C), and **in that** the triggering means (3) is configured to automatically detect the phenomenon of suction of the liquid by the wiper (2).

2. Control method according to the preceding claim, **characterized in that** the second wiping mode (200) is repeated.

3. Control method according to the preceding claim, **characterized in that** the method toggles from the second wiping mode (200) to the first wiping mode (100), following the repetition of the second wiping mode (200).

4. Control method according to any one of the preceding claims, **characterized in that**, in the second wiping mode (200), from the intermediate position (2B), the wiper (2) returns to the initial position (2A).

5. Control method according to any one of Claims 1 to 3, **characterized in that**, in the second wiping mode (200), from the intermediate position (2B), the wiper (2) is displaced towards the extreme position (2C) according to a second speed greater than a first speed of the wiper (2) during its displacement between the initial position (2A) and the intermediate position (2B).

6. Control method according to any one of Claims 1 to 5, **characterized in that** the wiper system (1) comprises at least one liquid spraying device (20), and **in that**, in the first wiping mode (100), a first quantity of liquid is sprayed by the spraying device (20), and **in that**, in the second wiping mode (200), from the intermediate position (2B), a second quantity of liquid, less than the first quantity, is sprayed by the spray device (20).

7. Control method according to the preceding claim, **characterized in that** the second quantity of liquid results from a reduction of the liquid flow rate in the spraying device (20), compared to a liquid flow rate corresponding to the first quantity of liquid.

8. Wiper system (1) for a motor vehicle comprising at least:
- one wiper (2) of a windscreen (6) capable of being displaced between an initial position (2A) and an extreme position (2C),
- a control unit (5) of a drive motor (4) of the wiper (2),
the wiper system (1) being **characterized in that** it is associated with a means (3) for triggering a signal (S) representative of a phenomenon of suction of a liquid by the wiper (2) when the wiper (2) is displaced from the extreme position (2C) to the initial position (2A), the triggering means (3) being configured to automatically detect the phenomenon of suction of the liquid by the wiper (2) .
